# EUROPÄISCHE PATENTSCHRIFT

(11) **EP 1 549 827 B1**
(45) Veröffentlichungstag und Bekanntmachung des Hinweises auf die Patenterteilung: **05.03.2008**
(21) Anmeldenummer: 03750144.2
(22) Anmeldetag: 10.10.2003
(51) Int. Cl.: F01K 23/06, F02G 5/02

(54) **VERFAHREN UND EINRICHTUNG ZUR RÜCKGEWINNUNG VON ENERGIE**
METHOD AND DEVICE FOR RECOVERING ENERGY
PROCEDE ET DISPOSITIF DE RECUPERATION D'ENERGIE

(30) Priorität: 11.10.2002 AT 18322003
(43) Veröffentlichungstag der Anmeldung: 06.07.2005
(73) Patentinhaber: Alpps Fuel Cell Systems GmbH, 8051 Graz (AT)
(72) Erfinder: CLAASSEN, Dirk, Peter, A-8045 Graz (AT); WANCURA, Herbert, A-8055 Seiersberg (AT)
(74) Vertreter: Kopecky, Helmut
(86) Internationale Anmeldenummer: PCT/AT2003/000309
(87) Internationale Veröffentlichungsnummer: WO 2004/033859

(56) Entgegenhaltungen:
- WO-A-02/31319
- WO-A-94/28298
- US-A- 4 470 476
- US-A- 5 327 987
- US-A- 5 609 029
- US-A- 6 155 212
- PATENT ABSTRACTS OF JAPAN vol. 2000, no. 22, 9. März 2001 (2001-03-09) & JP 2001 132538 A (KAWAMURA HIDEO), 15. Mai 2001 (2001-05-15)

## Beschreibung

Die Erfindung betrifft ein Verfahren gemäß den Oberbegriffen der Ansprüche 1 und 2 und jeweils eine Einrichtung zur Durchführung dieser Verfahren.

Aus dem Stand der Technik bekannt sind Verfahren zur Rückgewinnung von Energie aus Abgasen im großtechnischen Bereich von Industrieanlagen, bei denen im wesentlichen stationäre Prozesse einen vergleichsweise konstanten Abgasstrom geben, der meist über ein Rückführungsverfahren dem Prozess direkt wieder zugute kommt. Noch wesentlich stärker verbreitet ist die sog. Kraft/Wärmekopplung, bei der die z.B. bei einem Dampfkraftwerk entstehende Wärmeenergie direkt zu Heizzwecken oder als Prozesswärme genutzt wird.

In der US-A-5,896,738 wird beispielsweise ein System zur Dampferzeugung aus dem Abgas einer Gasturbine beschrieben, bei dem der Heißdampf mit Kraftstoff vermischt wieder zur Turbine rückgeführt wird. Dieses System ist bei großen Stationäranlagen mit optimiertem Wirkungsgrad sinnvoll. Im mobilen Einsatz unter variablen Lastzuständen würde der zusätzliche Wasserverbrauch einerseits unzumutbar sein, andererseits auf den Wirkungsgradgewinn für die Hilfsenergie verzichtet.

Die US-A-4,729,225 beschreibt ein System, bei dem der Turbolader auf so viel Überschussenergie ausgelegt ist, dass diese für Nebenantriebszwecke benutzt werden kann. Eine solche Lösung hat den Nachteil, dass sie direkten Einfluss auf die Auslegung der Verbrennungskraftmaschine nimmt und umgekehrt verstärkt von deren Betriebszustand abhängig ist und daher nicht als unabhängiges System zur Hilfsenergieerzeugung verwendet werden kann.

Dokument WO 02/31319 offenbart eine Rankine-Verfahren-Vorrichtung für einen Verbrennungsmotor, wobei Energie aus der Abwärme eines Prozesses zurückgewonnen wird. In der Zusammenfassung wird erklärt, dass ein Teil der Abwäreme über einen Wärmeüberträger eine Flüssigkeit verdamft und dessen Druck erhöht und dieser Druck in einer Arbeitsmaschine in mechanische Energie umgewandelt wird.

Dabei wird Wasser in einer ersten Stufe in einem ersten Wärmetauscher im Abgas vorgewärmt. Das vorgewärmte Wasser wird zu einem Wassermantel um den Zylinderblock geführt. Eine Dampfturbine wandelt dann den Druck in mechanische Energie um. Auch die Dokumente US 5,327,987, US 5,609,029, WO 94/28298, US 6,155,212, JP2001-132538 und US 4,470,476 offenbaren jeweils eine Vorrichtung und ein Verfahren ähnlicher Art.

Die Abgasrückführung (AGR) ist ein bekanntes Verfahren, um die unerwünschten NOx-Emissionen im Abgas von (Diesel-)Kraftfahrzeugen oder sonstigen Fortbewegungsmitteln, wie Schiffen etc., reduzieren zu können. Ein Teil der Abgase wird über das Ansaugsystem des Motors der Verbrennungsluft bzw. dem Kraftstoff/Luftgemisch wieder zugeführt. Eine Temperatursenkung und Verzögerung der Verbrennung und damit eine Verringerung des Stickstoffoxid-Ausstoßes um ca. 40 % sind möglich; in der Regel ist die AGR auch mit einem etwas höheren Kraftstoffverbrauch verbunden.

Bekannterweise erreichen die Abgase der VKM von Last- und Personenkraftwagen Temperaturen von 700 bzw. 450 °C. Diese heißen Abgase müssen auf die Größenordnung von 150 bis 200 °C gekühlt werden, um mit Verbrennungsluft vermischt dem Motor rückgeführt werden zu können. Eine Temperaturminderung des Abgases ist über den Einbau eines Wärmetauschers möglich und wird auch so standardmäßig gebaut.

Im Wärmetauscher kann sich z.B. jenes Kühlmittel befinden, das auch die VKM selbst kühlt. Das Kühlmittel fließt dann in einer Maschinen-Kühlsystem-Schleife: Zuerst nimmt es Wärme des Motors auf und anschließend noch Wärme des Abgases, um schließlich über einen Radiator Wärme an die Umgebung abzugeben. In diesem System werden aufgrund der erhöhten Temperaturen jedoch sowohl an den Wärmetauscher als auch an den Radiator sehr hohe Anforderungen gestellt (kompaktes Design, Material-Resistenz gegenüber hohen Temperaturen, Korrosion und Ablagerungen).

In der EP 1 091 113 A werden Möglichkeiten aufgezeigt, die diese soeben beschriebenen Probleme vermeiden oder zumindest minimieren. Beispielsweise führt der Einbau eines zweiten Hochtemperatur-Abgaskühlers zu einem Aufnehmen eines großen Teils der Hitze, was darin resultiert, dass die eigentliche Maschinen-Kühlsystem-Schleife wie gewohnt arbeiten kann und mit keinerlei Beschränkungen aufgrund der hohen Temperaturen auferlegt werden muss. Dieser zweite Abgaskühler ist in einer Kühlschleife mit einem zweiten Radiator vorgesehen. Insgesamt kann eine effektivere AGR-Kühlung erreicht werden, mit der zudem kein Anstieg der Radiatorfläche einhergehen muss.

Jedenfalls muss dem heißen Abgas Wärmeenergie entnommen werden, um es in einer AGR derart einsetzen zu können, dass eine Reduzierung des Stickoxidausstoßes erfolgt. Mit Hilfe der bekannten Methoden kann die Temperatur des Abgases auf den geforderten Wert gebracht werden, allerdings - und darin liegt eindeutig das große Potential der Erfindung - wird die Energie des Abgases lediglich abgeführt und keiner weiteren Nutzung zugedacht.

Die Erfindung stellt sich daher die Aufgabe, nämlich erstens eine Verringerung der thermischen Last für das Kühlsystem durch Umsetzung der thermischen Energie des Abgases in der Abgasrückführung in mechanisch nutzbare Energie zu erwirken und zweitens eine Nutzung des Systems zur weiteren Verringerung der Emissionen der Verbrennungskraftmaschine zu schaffen.

Diese Aufgabe wird erfindungsgemäß dadurch gelöst, dass zumindest ein Teil der Abwärme des rückgeführten Abgases eine Flüssigkeit verdampft und/oder einen Dampf und/oder ein Gas erhitzt und dessen Druck erhöht, und dieser Druck in einer Arbeitsmaschine in mechanische Energie umgewandelt wird. Vorteilhafte Varianten hierzu sind in den Unteransprüchen 3 bis 15 dargelegt.

Gemäß einer Variante wird bei einem Verfahren zur Rückgewinnung von Energie aus der Abwärme einer Verbrennungskraftmaschine, insbesondere einer mobilen Verbrennungskraftmaschine, und einer Brennstoffzelle zumindest ein Teil der Abwärme des Abgases der Verbrennungskraftmaschine, insbesondere eines rückgeführten Abgases, und zumindest ein Teil der Abwärme der Brennstoffzelle eine Flüssigkeit verdampft und/oder einen Dampf und/oder ein Gas erhitzt und dessen Druck erhöht, und dieser Druck in einer Arbeitsmaschine in mechanische Energie umgewandelt. Vorteilhafte Varianten sind in den Unteransprüchen 3 bis 16 enthalten.

Die Ansprüche 17 bis 32 beinhalten bevorzugte Ausführungsformen von Einrichtungen zur Durchführung der beanspruchten Verfahren.

Bisher nicht eingesetzt werden Lösungen, bei denen die Abwärme einer Verbrennungskraftmaschine mit Abgasrückführung und/oder einer Brennstoffzelle, unter den schwankenden praktischen Betriebsbedingungen in eine andere als Wärmeenergie umgesetzt wird. Dabei ist als besonders vorteilhaft zu erwähnen die Verwendung als Hilfsenergie für verschiedene im Zusammenhang mit dem primären chemischen oder thermischen Prozess vorhandene Verbraucher. Diese können sowohl mechanische Energie benötigen, wie z.B. ein Kompressor für eine Klimaanlage, oder auch elektrische, wie z.B. Stellmotoren im Regelprozess, oder die Beleuchtung eines Fahrzeuges. Der besondere energietechnische Vorteil liegt z.B. darin, dass eine Nutzung der über den primären chemischen bzw. thermischen Prozess erzeugten Energie immer den vollen Verlusten des Prozesses unterworfen ist, also jede produktiv entnommene Energie auch immer weitere Verlustenergie erzeugt, hingegen die Nutzung der verlorenen Energie aus dem Abgas keinen weiteren Primärenergiebedarf darstellt. Wenn man Wirkungsgrade von 10 bis 35% als typisch für einen Verbrennungsmotor annimmt, der manchmal sogar extra für die benötigte Hilfsenergie in Betrieb gehalten werden muss, so erspart die durch die vorliegende Erfindung gewonnene Energie das Drei- bis Zehnfache davon als Primärenergieeinsatz.

Aus der Literatur bekannt sind auch Lösungen, bei denen die Hilfsenergie eines Fahrzeuges über z.B. einen gesonderten kleinen Dieselmotor erzeugt wird oder z.B. auch über eine Brennstoffzelle. Beide Arten von Hilfsenergiequellen (APU = Auxiliary Power Unit) haben vergleichsweise große Wärmeverluste.

Die vorliegende Erfindung nützt daher die in einem von einem Verbrennungsmotor mit Abgasrückführung angetriebenen Fahrzeug entstehende Überschussenergie an Abwärme, indem sie diese über einen thermischen Zwischenkreis, vorzugsweise mit überhitztem Dampf, einer zusätzlichen Arbeitsmaschine, vorzugsweise einer Dampfturbine, zuführt und am Abtrieb der Dampfturbine entweder direkt mechanische Energie entnimmt oder diese über einen an sich bekannten Generator in elektrischen Strom umwandelt. In gleicher Weise wird die Abwärme der Hilfsenergiequellen einer energetischen Nutzung zugeführt.

Je nach Verfahren und Auslegung des thermischen bzw. chemischen Prozesses können Temperaturen von 300 °C bis 1000 °C für die Energierückgewinnung genutzt werden. Bei Verbrennungskraftmaschinen ist vor allem das Abgas nutzbar und steht im allgemeinen bei 300 bis 600 °C zur Verfügung. Gleichermaßen haben auch Brennstoffzellen, wenn sie als Hochtemperaturbrennstoffzellen ausgeführt sind, hohe Abgas- und Kühlmitteltemperaturen, die bis zu 1000 °C erreichen können. Hochtemperaturbrennstoffzellen werden deshalb auch eingesetzt, weil sie einen etwas höheren Wirkungsgrad haben und hinsichtlich des zugeführten Kraftstoffs toleranter sind. Als Richtwert kann man aber auch dabei annehmen, dass ca. 50 % der zugeführten Energie in das Abgas geht oder aus dem Kühlvorgang zur Verfügung steht.

In dem thermischen Zwischenkreis zirkuliert ein Medium, ggf. unter Druck gesetzt, das über Wärmeübertrager die thermische Energie aus dem Abgas und/öder dem Kühlkreislauf des thermischen oder chemischen Prozesses aufnimmt und diese später in der zusätzlichen Arbeitsmaschine wieder abgibt. Ein solches Medium kann jede für einen Kühl- oder Heizkreis geeignete Flüssigkeit sein, oder ein Dampf oder ein Gas. Da eine mobile Anlage gelegentlich auch bei Temperaturen unter 0 °C betrieben werden muss, wird das Medium so ausgewählt, dass es bei für Fahrzeuge üblichen Umgebungstemperaturen nicht fest wird. Ein einfaches und bewährtes Beispiel hiefür ist ein mit Frostschutz versetztes Wasser. Eine besonders günstige Ausführung sieht vor, dass der thermische Zwischenkreis mit dem Kühlmittelkreis des Verbrennungsmotors direkt verbunden ist, dasselbe Medium verwendet wird und über z.B. ein Ventil die Durchströmung zwischen den beiden Kreisläufen gesteuert werden kann. Damit kann einerseits das nach der Arbeitsmaschine abgekühlte Medium zur Kühlung des Verbrennungsmotors beitragen, andererseits das vom Verbrennungsmotor vorgewärmte Medium nach dem Wärmeübertrager aus dem Abgas eine höhere Temperatur erreichen. Es wird also zusätzlich noch ein Teil der in den Kühlkreislauf des Verbrennungsmotors gehenden thermischen Energie zurückgewonnen. Umgekehrt kann die aus dem Abgas der Hilfsenergiequelle, z. B. einer Brennstoffzelle, gewonnene Energie auch dazu verwendet werden, den Verbrennungsmotor vor dem Start vorzuwärmen. Dies sichert einen verringerten Abgasausstoß beim Kaltstart und ggf. auch eine Vorheizung des Passagierraums über die konventionelle Heizung des Fahrzeugs.

In einer weiteren vorteilhaften Ausführung wird das Medium des thermischen Zwischenkreises in wenigstens zwei Stufen erwärmt. Die Abwärme der Verbrennungskraftmaschine, wird dazu benutzt, in einer ersten Stufe vorzuheizen, und die Abwärme eines zweiten thermischen oder chemischen Prozesses, z.B. der Hilfsenergiequelle, erhitzt das Medium in einer zweiten Stufe bis auf den höheren Endwert für die Zufuhr zur zusätzlichen Arbeitsmaschine. Durch diese wenigstens zweistufige Ausführung kann der Wirkungsgrad der Einrichtung zur Rückgewinnung von Energie aus dem Abgas wesentlich erhöht werden, weil die Eintrittstemperatur in die Arbeitsmaschine höher ist.

Die Erhitzung des Mediums erfolgt im Normalfall über Wärmetauscher in einer der üblichen Ausführungen. Eine besonders vorteilhafte Ausführung eines Wärmetauschers ist, dass über feinste Metallstrukturen das Verhältnis von Oberfläche zu Volumen maximiert wird. Dabei ist die Gasführung so gewählt, dass ein Eintreten von laminaren Strömungen, welche den Wärmetransfer reduzieren, verhindert wird. Wärmetauscher bewirken, dass die Temperatur des Mediums im Zwischenkreis immer kühler als die zur Wärmeübertragung verwendete Abwärme ist. Hat also der Verbrennungsmotor an der Stelle, an der das Abgas ohne schädliche Rückwirkung auf den Verbrennungsprozess in den Wärmetauscher geführt werden kann, eine Abgastemperatur von z.B. 300 °C, so kann das Medium im Zwischenkreis nur ca. 260 - 280 °C erreichen. Daher wird in einer Ausführungsform der Erfindung vorgeschlagen, entweder anstelle oder zusätzlich zu einem Wärmetauscher eine Wärmepumpe als Wärmeübertrager zu verwenden. Damit kann die Temperatur des Mediums und dessen Wärmeinhalt deutlich über jene des Abgases des Verbrennungsmotors angehoben werden. Dies wiederum erlaubt einen verbesserten Wirkungsgrad bei der Arbeitsmaschine, vorzugsweise Dampfturbine.

Eine bevorzugte Ausführung der Erfindung ist nachstehend beschrieben.

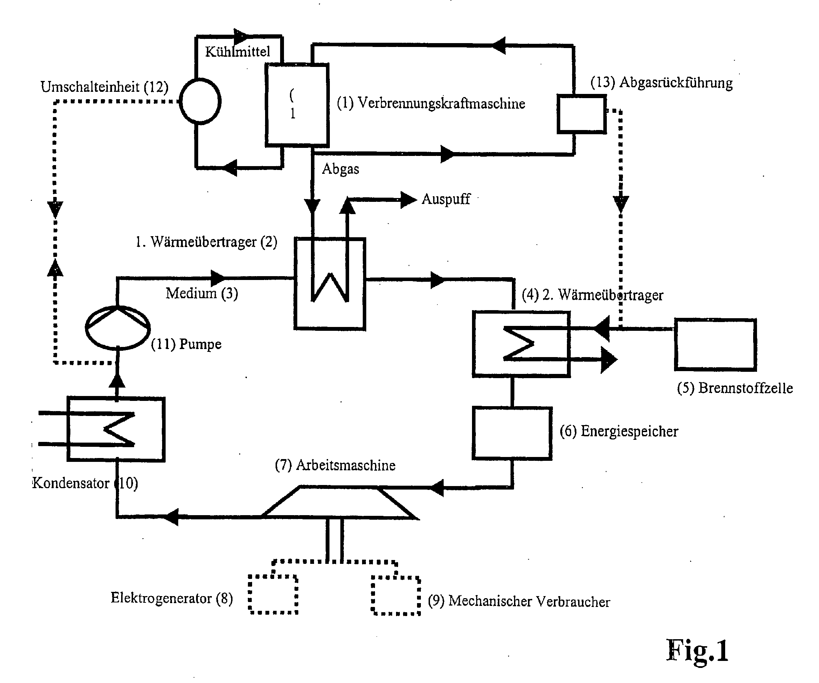

Das Abgas einer Verbrennungskraftmaschine 1 wird gemäß Fig. 1 nach dem allfällig vorhandenen Turbolader durch einen ersten Wärmeübertrager 2 geführt, bevor es zur weiteren Abgasnachbehandlung und zum Auspuff weiterströmt. Im Wärmeübertrager 2 erhitzt es dadurch ein Medium 3, vorzugsweise das Kondensat einer Wasser/Frostschutzmischung, das dadurch Heißdampf bildet. Das Medium 3 wird zu einem allfälligen zweiten Wärmeübertrager 4 weitergeleitet, der auf der Primärseite z.B. vom Abgas oder vom Kühlmittel einer Brennstoffzelle 5 gespeist wird und damit das Medium 3 zusätzlich überhitzt.

Alternativ oder zusätzlich kann auch die Wärme aus einer Abgasrückführung 13 der Verbrennungskraftmaschine 1 einem Wärmeübertrager, vorzugsweise dem zweiten 4 - ggf. auch einem weiteren - zugeführt werden.

In dem Dampfkreis sorgt ein Energiespeicher 6 dafür, dass schwankender Leistungsanfall wie auch schwankender Bedarf ausgeregelt werden können. Nach dem Energiespeicher treibt das Medium 3 eine Arbeitsmaschine 7, vorzugsweise eine Dampfturbine, an, die ihre Energie über die Abtriebswelle an einen Elektrogenerator 8 und/oder an einen mechanischen Verbraucher 9 abgibt. Das Medium wird über einen Kondensator 10 in flüssige Form zurückgeführt und durch eine Pumpe 11 wieder unter Druck gesetzt und abermals dem Kreislauf zugeführt.

In einer weiterführenden vorteilhaften Ausführung wird das Medium 3 über eine Umschalteinheit 12 direkt aus dem Kühlkreislauf der Verbrennungskraftmaschine 1 gespeist. Bei Normalbetrieb zirkuliert das Medium im geschlossenen Kreislauf. Bei gewissen Betriebsbedingungen, wie z.B. Kaltstart, können die beiden Kreisläufe miteinander verbunden werden, damit der jeweils wärmere den anderen vorwärmt.

In einer anderen erfindungsgemäßen Ausführung ist die Arbeitsmaschine 7 eine Kolbenmaschine, entweder eine Hub- oder eine Drehkolbenmaschine, oder eine Gasturbine.

Der Wärmeübertrager 2 kann in einer weiteren erfindungsgemäßen Ausführung eine Wärmepumpe sein, um damit das Temperaturniveau des Mediums 3 über jenes der Abwärme aus dem thermischen Prozess der Verbrennungskraftmaschine 1 zu heben.

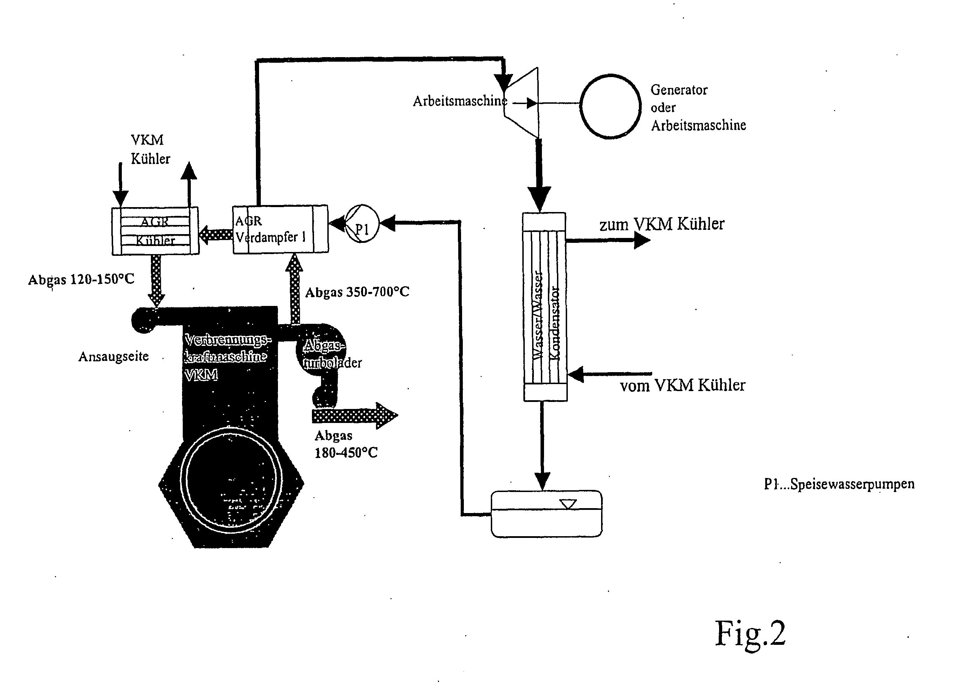

Erfindungsgemäß wird gemäß Fig. 2 die Hitze des Abgases, welches zur AGR gekühlt werden muss, derart genutzt, dass es jenes flüssige Mittel, das durch den ersten Wärmetauscher (AGR Verdampfer 1) fließt, verdampft. Die im Dampf enthaltene Energie kann einer weiteren energetischen Nutzung zugeführt werden, bevor der wieder verflüssigte Dampf erneut den Kreislauf durchläuft. Die mechanisch nutzbar gemachte Energie muss nicht über den Motorwärmetauscher (Kühler, Radiator) abgeführt werden. Dadurch kann dieser Wärmetauscher entweder kleiner ausgeführt werden oder die erforderliche Kühlleistung für entsprechend höhere Abgasrückführraten - mit entsprechendem Nutzen für die Stickoxid-Emissionsverminderung - erbringen.

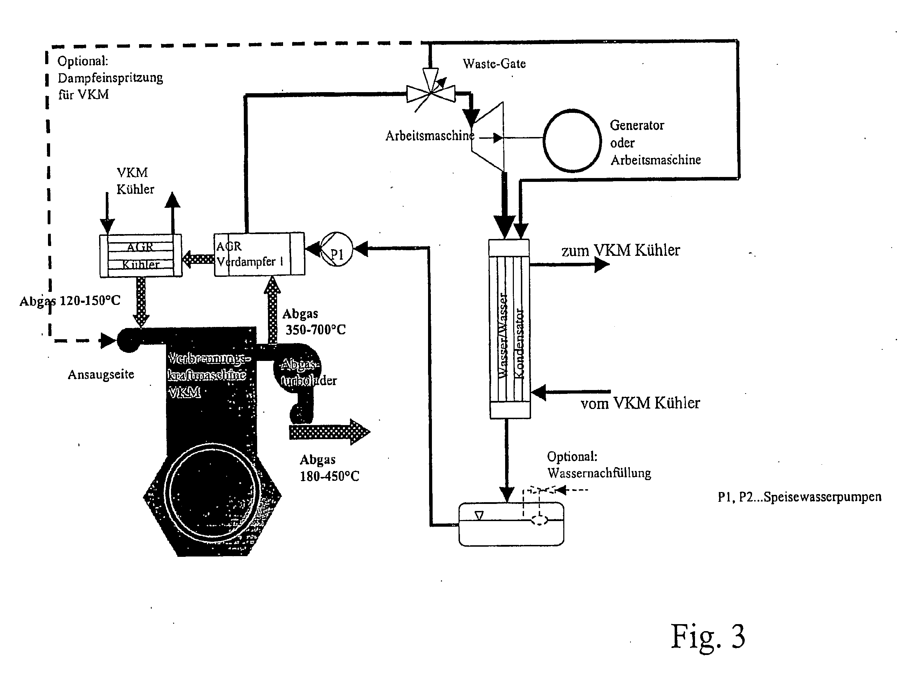

Da Arbeitsmaschinen, welche mit der Expansion von Dampf arbeiten, einen engen optimalen Betriebsbereich aufweisen, werden in einer besonderen Ausführung der Massenstrom und der der Arbeitsmaschine zugeführte Druck durch ein Waste-Gate beschränkt. In dieser Ausführung wird der überschüssige Teil des beim Prozess entstehenden Dampfes der Verbrennungsluft beigemengt. Das ist ein an sich bekanntes Verfahren, das ebenfalls dem Zwecke der Stickoxidreduktion dient. Vorteilhaft ist die direkte Koppelung der Maßnahmen, da jene Betriebsbereiche, welche hohe, rückgewinnbare thermische Energieströme aufweisen, (Vollast) auch jene Bereiche sind, in denen der Stickoxid-Emissionsausstoß am höchsten ist. In diesem Betriebsmodus wird jedoch der Dampf verbraucht, so dass ein Auffüllen des Systems notwendig wird (Fig. 3).

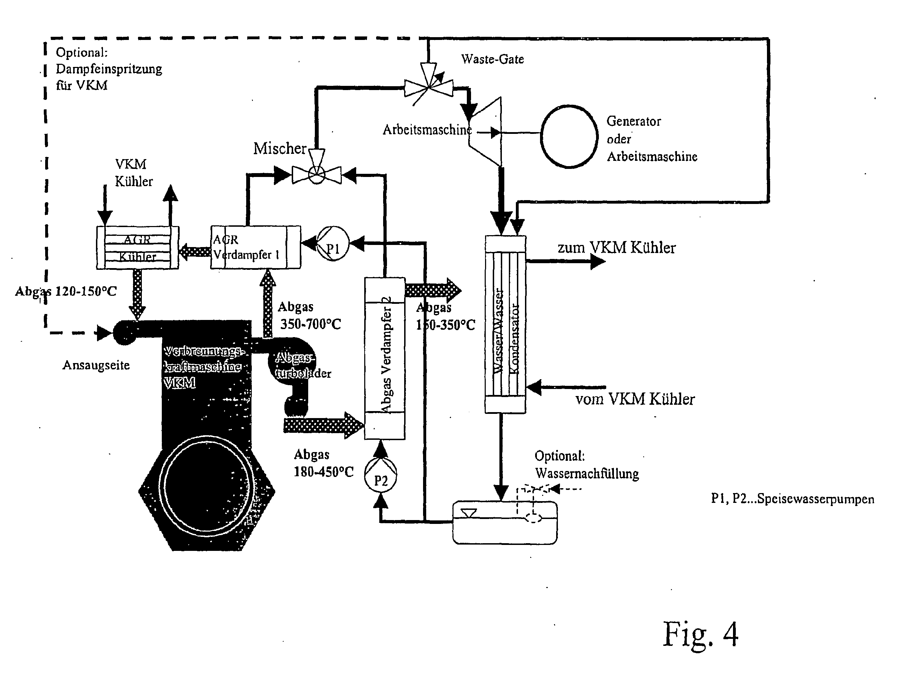

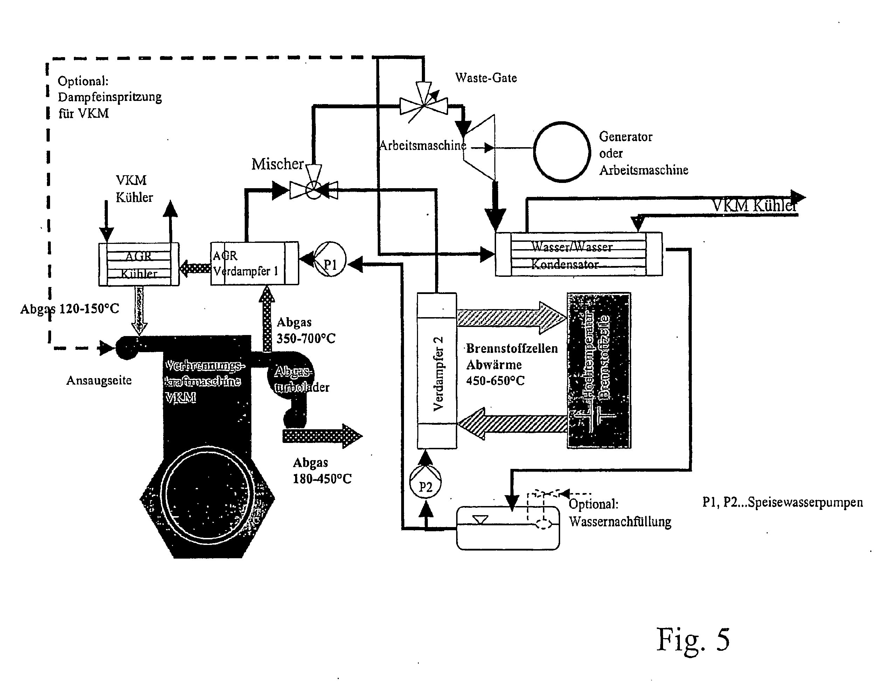

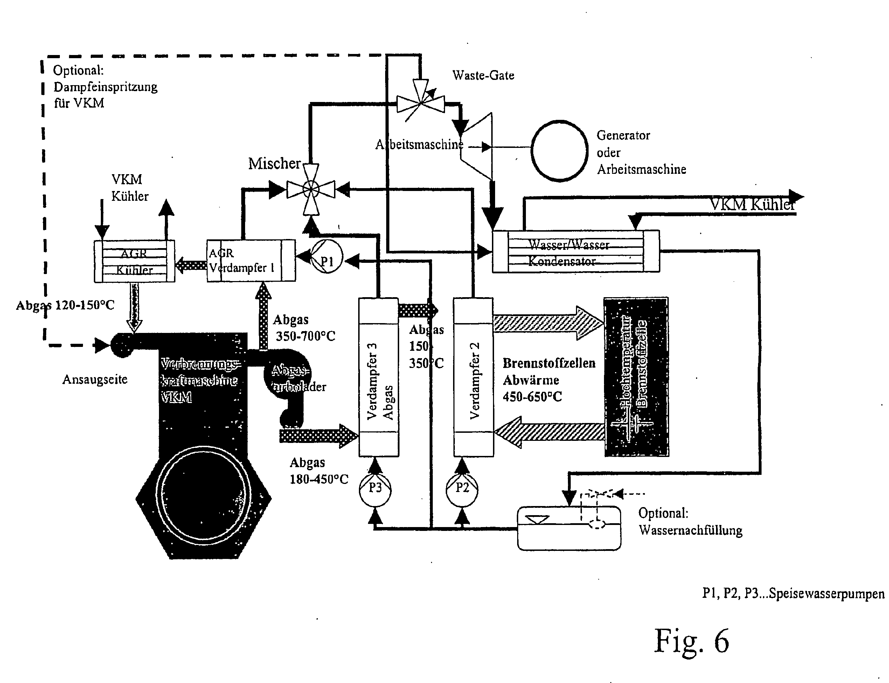

Der Dampf kann mit einem anderweitig entstandenen Dampf gemischt werden, um so zwar nicht die Temperatur, sehr wohl aber das Volumen zu erhöhen (Fig. 4, 5, 6). Ein vergrößertes Dampfvolumen kann analog einem durch Druck verdichteten Dampf für eine Arbeitsleistung herangezogen werden. Der anderweitig erzeugte Dampf kann sowohl von Energiequellen einer Wärmekraftmaschine als auch von einer Brennstoffzelle stammen. Auch die Koppelung aller Wärmequellen ist erfindungsgemäß vorgesehen (Fig. 6)

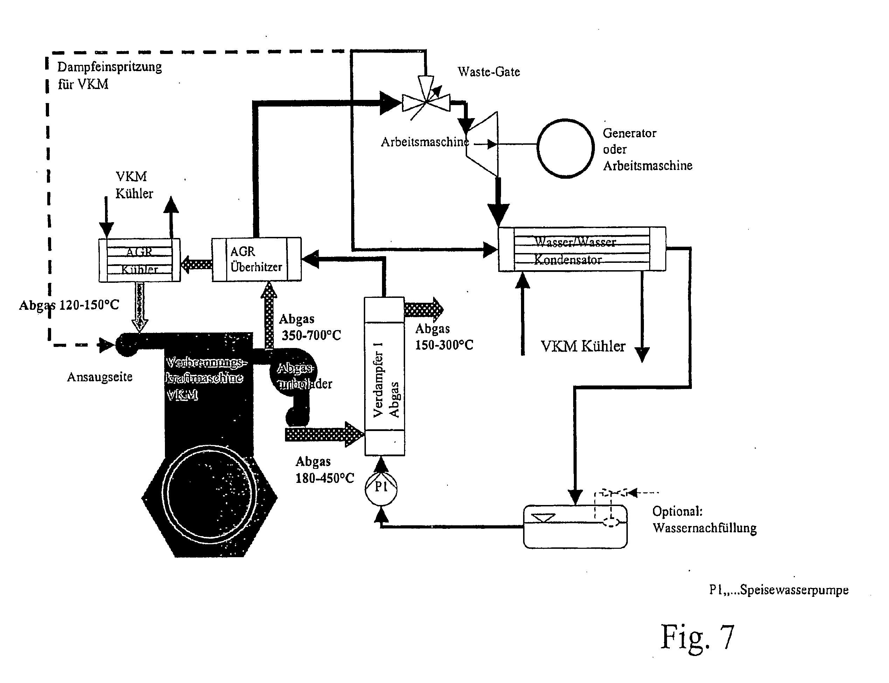

Die Energie aus der AGR kann aber auf Grund der höheren Temperatur des Abgases im Abgasrückführkreis auch zur Überhitzung eines bereits anderweitig entstandenen Dampfes genutzt werden (Fig. 7), der dann z.B. eine Arbeitsmaschine betreiben kann, die über eine Antriebswelle mit einem Generator und/oder mechanischen Verbrauchern verbunden ist.

Die einzelnen Verdampfer gemäß den Fig. 4, 5 und 6 werden mit dem Verdampferausgang rückgekoppelt betrieben, sodass in den Verdampferkreisen gleiche Druckverhältnisse herrschen und eine Mischung des in dem parallel geschalteten Verdampfer erzeugten Dampfes möglich ist. Dies wird durch fördermengengeregelte Pumpen P1, P2 und P3 erreicht.

Gemäß Fig. 7 sind hingegen zwei Verdampfer in Serie geschaltet vorgesehen.

## Patentansprüche

1. Verfahren zur Rückgewinnung von Energie aus der Abwärme einer mobilen Diesel-Verbrennungskraftmaschine mit Abgasrückführung und einem Abgasturbolader, **dadurch gekennzeichnet, dass** nur ein Teil des Abgases vor der Zuführung zum Abgas -Turbolader abgezweigt und dieses rückgeführt wird und zumindest ein Teil der Abwärme des rückgeführten Abgases eine Flüssigkeit verdampft und/oder einen Dampf und/oder ein Gas erhitzt und dessen Druck erhöht, und dieser Druck in einer Arbeitsmaschine in mechanische Energie umgewandelt wird.

2. Verfahren nach Anspruch 1, **dadurch gekennzeichnet, dass** das Verdampfen bzw. Erhitzen des Dampfs oder Gases zwei- oder mehrstufig erfolgt.

3. Verfahren nach einem der Ansprüche 1 und 2, **dadurch gekennzeichnet, dass** die Umwandlung in mechanische Energie über eine Dampfturbine durchgeführt wird.

4. Verfahren nach einem der Ansprüche 1 und 2, **dadurch gekennzeichnet, dass** die Umwandlung in mechanische Energie über eine Gasturbine durchgeführt wird.

5. Verfahren nach einem der Ansprüche 1 und 2, **dadurch gekennzeichnet, dass** die Umwandlung in mechanische Energie über eine Kolbenmaschine durchgeführt wird..

6. Verfahren nach einem der Ansprüche 1 bis 5, **dadurch gekennzeichnet, dass** wenigstens eine Wärmeübertrager-Stufe eine Wärmepumpe ist.

7. Verfahren nach einem der Ansprüche 1 bis 6, **dadurch gekennzeichnet, dass** vor der Arbeitsmaschine Energie in einem Energiespeicher gespeichert wird.

8. Verfahren nach einem der Ansprüche 1 bis 7, **dadurch gekennzeichnet, dass** die mechanische Energie als Hilfsenergie für die Verbrennungskraftmaschine und/oder als Hilfsenergie in Fortbewegungsmitteln, wie Fahrzeugen, verwendet wird, vorzugsweise zum Antrieb einer Kühlmittelpumpe und/oder eines Hydraulikaggregats und/oder eines Kompressors für eine Klimaanlage.

9. Verfahren nach einem der Ansprüche 1 bis 8, **dadurch gekennzeichnet, dass** die mechanische Energie in elektrische umgewandelt wird.

10. Verfahren nach Anspruch 9, **dadurch gekennzeichnet, dass** die elektrische Energie als Hilfsenergie für die Verbrennungskraftmaschine und/oder als Hilfsenergie in Fahrzeugen verwendet wird, vorzugsweise zum Antrieb einer Kühlmittelpumpe und/oder eines Hydraulikaggregats und/oder eines Kompressors für eine Klimaanlage.

11. Verfahren nach einem der Ansprüche 1 bis 10, **gekennzeichnet durch** eine Abgasturbine der Verbrennungskraftmaschine, wobei vor Einleitung des Abgases in die Abgasturbine rückzuführendes Abgas abgezweigt wird.

12. Verfahren nach Anspruch 11, **dadurch gekennzeichnet, daß** zumindest ein Teil der Abwärme des in der Abgasturbine entspannten Abgases eine Flüssigkeit verdampft und/oder einen Dampf und/oder ein Gas erhitzt und dessen Druck erhöht, und dieser Druck in einer Arbeitsmaschine in mechanische Energie umgewandelt wird.

13. Verfahren nach Anspruch 11 und 12, **dadurch gekennzeichnet, daß** die durch das entspannte Abgas erhitzte Flüssigkeit bzw. der Dampfbzw. das Gas mittels des rückzuführenden Abgases weiter erhitzt, insbesondere überhitzt wird.

14. Verfahren nach Anspruch 11 und 12, **dadurch gekennzeichnet, daß** die durch das entspannte Abgas erhitzte Flüssigkeit bzw. der Dampf bzw. das Gas mit der durch das rückgeführte Abgas erhitzten Flüssigkeit bzw. dem Dampf bzw. dem Gas gemischt wird.

15. Einrichtung zur Rückgewinnung von Energie aus der Abwärme einer mobilen Diesel-Verbrennungskraftmaschine mit Abgasrückführung und Turbolader, **gekennzeichnet durch** die Kombination folgender Merkmale:
• eine Abgasrückführleitung ausgehend von der von der mobilen Diesel-Verbrennungskramnaschine zum Turbolader führenden Abgasleitung,
• wenigstens einen Wärmeübertrager zur Übertragung der Wärmeenergie des rückgeführten Abgases auf ein Wärmeträgermedium,
• eine Einrichtung zur Erhöhung des Drucks des Wärmeträgermediums,
• eine Arbeitsmaschine, vorzugsweise eine Dampfturbine, die die in dem Wärmeträgermedium gespeicherte Energie in mechanische Energie umwandelt.

16. Einrichtung nach Anspruch 15, **gekennzeichnet durch** zwei oder mehr Wärmeübertrager, die das Wärmeträgermedium stufenweise erhitzen.

17. Einrichtung nach Anspruch 15 oder 16, **dadurch gekennzeichnet, daß** das Wärmeträgermedium ident ist mit dem Kühlmedium für die Verbrennungskraftmaschine.

18. Einrichtung nach einem der Ansprüche 15 bis 17, **dadurch gekennzeichnet, daß** wenigstens ein Wärmeübertrager eine Wärmepumpe ist.

19. Einrichtung nach einem der Ansprüche 15 bis 18, **dadurch gekennzeichnet, dass** vor der Arbeitsmaschine ein Energiespeicher angeordnet ist.

20. Einrichtung nach einem der Ansprüche 15 bis 19, **dadurch gekennzeichnet, dass** die Arbeitsmaschine mit wenigstens einem Antrieb für wenigstens ein Hilfsaggregat für den thermischen oder chemischen Prozess, vorzugsweise Kühl- oder Schmiermittelpumpen, gekoppelt ist.

21. Einrichtung nach einem der Ansprüche 15 bis 20, **dadurch gekennzeichnet, dass** die Arbeitsmaschine mit wenigstens einem Antrieb für wenigstens ein Hilfsaggregat für ein Fahrzeug, vorzugsweise dem Antrieb eines Hydraulikaggregats und/oder eines Kompressors für eine Klimaanlage gekoppelt ist.

22. Einrichtung nach einem der Ansprüche 15 bis 21, mit einem Stromerzeuger, vorzugsweise Generator, der mit der Arbeitsmaschine antreibbar ist und zumindest einen Teil der mechanische Energie in elektrische umwandelt.

23. Einrichtung nach Anspruch 22, **dadurch gekennzeichnet, dass** die elektrische Energie zum Betrieb von Hilfsaggregaten für die Verbrennungskraftmaschine, vorzugsweise Kühl- oder Schmiermittelpumpen, vorgesehen ist.

24. Einrichtung nach Anspruch 22, **dadurch gekennzeichnet, dass** die elektrische Energie zum Betrieb von Hilfsaggregaten für ein Fahrzeug, vorzugsweise eines Hydraulikaggregats und/oder eines Kompressors für eine Klimaanlage, vorgesehen ist.

25. Einrichtung nach einem der Ansprüche 15 bis 24, **gekennzeichnet durch** eine Abgasturbine der Verbrennungskraftmaschine, wobei eine Abgas-Zweigleitung für rückzuführendes Abgas, die - in Strömungsrichtung des Abgases - von der Abgasleitung vor der Abgasturbine abzweigt, in einen Wärmeübertrager mündet.

26. Einrichtung nach Anspruch 25, **dadurch gekennzeichnet, daß** der Abgasturbine ein Wärmeübertrager für in der Abgasturbine entspanntes Abgas nachgeordnet ist.

27. Einrichtung nach Anspruch 25 und 26, **dadurch gekennzeichnet, daß** vom der Abgasturbine nachgeordneten Wärmeübertrager eine Wärmetragennediumleitung zum Wärmeübertrager für das rückzuführende Abgas führt.

28. Einrichtung nach Anspruch 25 und 26, **dadurch gekennzeichnet, daß** eine Mischeinrichtung für das vom rückzuführenden Abgas aufgeheizte Wärmeträgermedium und das vom restlichen Abgas aufgeheizte Wärmeträgermedium vorgesehen ist.

## Claims

1. A method for the recovery of energy from the waste heat of a mobile diesel internal combustion engine having an exhaust-gas recirculation and an exhaust-gas turbocharger,
**characterized in that**
only a portion of the exhaust gas is branched off prior to being supplied to the exhaust-gas turbocharger, and is recirculated, and at least a portion of the waste heat of said recirculated exhaust gas evaporates a liquid and/or heats a vapour and/or heats a gas and increases its pressure, and within a power engine this pressure is converted into mechanical energy.

2. A method according to claim 1,
**characterized by**
performing said evaporating or heating, respectively, of steam or gas in two or more stages.

3. A method according to any of claims 1 and 2,
**characterized by**
performing said conversion into mechanical energy via a steam turbine.

4. A method according to any of claims 1 and 2,
**characterized by**
performing said conversion into mechanical energy via a gas turbine.

5. A method according to any of claims 1 and 2,
**characterized by**
performing said conversion into mechanical energy via a piston machine.

6. A method according to any of claims 1 to 5,
**characterized in that**
at least one heat exchanger stage is a heat pump.

7. A method according to any of claims 1 to 6,
**characterized by**
storing energy in an energy storage device prior to said power engine.

8. A method according to any of claims 1 to 7,
**characterized by**
utilizing said mechanical energy as an auxiliary power for said internal combustion engine and/or as an auxiliary power on means of transport such as vehicles, preferably for driving a coolant pump and/or a hydraulic power pack and/or a compressor for an air conditioning system.

9. A method according to any of claims 1 to 8,
**characterized by**
converting said mechanical energy into electric energy.

10. A method according to claims 9,
**characterized by**
utilizing said electric energy as an auxiliary power for said internal combustion engine and/or as an auxiliary power on vehicles, preferably for driving a coolant pump and/or a hydraulic power pack and/or a compressor for an air conditioning system.

11. A method according to any of claims 1 to 10,
**characterized by**
an exhaust-gas turbine of said internal combustion engine, wherein prior to feeding the exhaust gas into said exhaust-gas turbine, exhaust gas to be recirculated is branched off.

12. A method according to claim 11,
**characterized in that**
at least a portion of the waste heat of the exhaust gas expanded within said exhaust-gas turbine, evaporates a liquid and/or heats a vapour and/or heats a gas and increases its pressure, and this pressure is converted into mechanical energy within a power engine.

13. A method according to claim 11 and 12,
**characterized by**
further heating, particularly overheating the heated liquid, vapour or gas, respectively, which has been expanded by means of said exhaust gas to be recirculated.

14. A method according to claim 11 and 12,
**characterized by**
mixing the liquid, vapour or gas, respectively, which has been heated by means of said expanded exhaust gas, with the liquid, vapour or gas, respectively, which has been heated by means of said recirculated exhaust gas.

15. A device for the recovery of energy from the waste heat of a mobile diesel internal combustion engine having an exhaust-gas recirculation and a turbocharger,
**characterized by** the combination of the following features:
• an exhaust-gas recirculation line, which starts from the exhaust-gas line leading from said mobile diesel internal combustion engine to said turbocharger,
• at least one heat exchanger for transferring the thermal energy of the recirculated exhaust gas to a heat carrier medium,
• a device for increasing the pressure of said heat carrier medium,
• a power engine, preferably a steam turbine, which converts the energy stored within said heat carrier medium into mechanical energy.

16. A device according to claim 15,
**characterized by**
two or more heat exchangers, which gradually heat said heat carrier medium.

17. A device according to claim 15 or 16,
**characterized in that**
said heat carrier medium is identical with the cooling medium for the internal combustion engine.

18. A device according to any of claims 15 to 17,
**characterized in that**
at least one heat exchanger is a heat pump.

19. A device according to any of claims 15 to 18,
**characterized in that**
an energy storage device is arranged prior to said power engine.

20. A device according to any of claims 15 to 19,
**characterized in that**
said power engine is coupled to at least one drive for at least one auxiliary power unit for the thermal or chemical process, preferably cooling or lubricant pumps.

21. A device according to any of claims 15 to 20,
**characterized in that**
said power engine is coupled to at least one drive for at least one auxiliary power unit for a vehicle, preferably the drive of a hydraulic power pack and/or a compressor for an air conditioning system.

22. A device according to any of claims 15 to 21, comprising an electric generator, preferably an alternator, which is drivable with said power engine and converts at least a portion of the mechanical energy into electric energy.

23. A device according to claim 22,
**characterized in that**
electric energy is provided for operating auxiliary power units for the internal combustion engine, preferably cooling or lubricant pumps.

24. A device according to claim 22,
**characterized in that**
electric energy is provided for operating auxiliary power units for a vehicle, preferably a hydraulic power pack and/or a compressor for an air conditioning system.

25. A device according to any of claims 15 to 24,
**characterized by**
an exhaust-gas turbine of said internal combustion engine, wherein an exhaust-gas branch line for exhaust gas to be recirculated, which - in the flowing direction of the exhaust gas - branches off from the exhaust-gas line prior to said exhaust-gas turbine, leads into a heat exchanger.

26. A device according to claim 25,
**characterized in that**
a heat exchanger for exhaust gas expanded within the exhaust-gas turbine is arranged downstream of said exhaust-gas turbine.

27. A device according to claim 25 and 26,
**characterized in that**
a heat carrier medium line leads from the heat exchanger arranged downstream of the exhaust-gas turbine to the heat exchanger for the exhaust gas to be recirculated.

28. A device according to claim 25 and 26,
**characterized in that**
a mixing device for the heat carrier medium heated up by the exhaust gas to be recirculated, and the heat carrier medium heated up by the residual exhaust gas is provided.

## Revendications

1. Procédé pour la récupération d'énergie provenant de la chaleur dissipée d'un moteur diesel mobile à combustion interne avec une remise en circulation des gaz d'échappement et une turbosoufflante à gaz d'échappement, **caractérisé en ce que** seulement une partie des gaz d'échappement est déviée avant l'amenée vers la turbosoufflante à gaz d'échappement et ladite partie est remise en circulation, et au moins une partie de la chaleur dissipée des gaz d'échappement remis en circulation fait évaporer un liquide et/ou réchauffe une vapeur et/ou un gaz et augmente leur pression, et cette pression est transformée en énergie mécanique dans une machine de travail.

2. Procédé selon la revendication 1, **caractérisé en ce que** l'évaporation et/ou le réchauffement de la vapeur ou du gaz a lieu en deux ou plusieurs étages.

3. Procédé selon l'une quelconque des revendications 1 et 2, **caractérisé en ce que** la transformation en énergie mécanique est effectuée par le biais d'une turbine à vapeur.

4. Procédé selon l'une quelconque des revendications 1 et 2, **caractérisé en ce que** la transformation en énergie mécanique est effectuée par le biais d'une turbine à gaz.

5. Procédé selon l'une quelconque des revendications 1 et 2, **caractérisé en ce que** la transformation en énergie mécanique est effectuée par le biais d'une machine à piston.

6. Procédé selon l'une quelconque des revendications 1 à 5, **caractérisé en ce qu'**au moins un étage d'échangeur de chaleur est une pompe à chaleur.

7. Procédé selon l'une quelconque des revendications 1 à 6, **caractérisé en ce que** l'énergie est stockée dans un accumulateur d'énergie en amont de la machine de travail.

8. Procédé selon l'une quelconque des revendications 1 à 7, **caractérisé en ce que** l'énergie mécanique est utilisée en tant qu'énergie auxiliaire pour le moteur à combustion interne et/ou en tant qu'énergie auxiliaire dans des moyens de déplacement, tels des véhicules, de préférence pour l'entraînement d'une pompe de fluide refroidisseur et/ou d'un groupe hydraulique et/ou d'un compresseur pour une installation de climatisation.

9. Procédé selon l'une quelconque des revendications 1 à 8, **caractérisé en ce que** l'énergie mécanique est transformée en énergie électrique.

10. Procédé selon la revendication 9, **caractérisé en ce que** l'énergie électrique est utilisée en tant qu'énergie auxiliaire pour le moteur à combustion interne et/ou en tant qu'énergie auxiliaire dans des véhicules, de préférence pour l'entraînement d'une pompe de fluide refroidisseur et/ou d'un groupe hydraulique et/ou d'un compresseur pour une installation de climatisation.

11. Procédé selon l'une quelconque des revendications 1 à 10, **caractérisé par** une turbine à gaz d'échappement du moteur à combustion interne, les gaz d'échappement à remettre en circulation étant déviés avant l'introduction des gaz d'échappement dans la turbine à gaz d'échappement.

12. Procédé selon la revendication 11, **caractérisé en ce qu'**au moins une partie de la chaleur dissipée des gaz d'échappement détendus dans la turbine à gaz d'échappement fait évaporer un liquide et/ou réchauffe une vapeur et/ou un gaz et augmente leur pression, et cette pression est transformée en énergie mécanique dans une machine de travail.

13. Procédé selon les revendications 11 et 12, **caractérisé en ce que** le liquide et/ou la vapeur et/ou le gaz réchauffés par les gaz d'échappement détendus sont encore réchauffés, en particulier surchauffés, au moyen des gaz d'échappement à remettre en circulation.

14. Procédé selon les revendications 11 et 12, **caractérisé en ce que** le liquide et/ou la vapeur et/ou le gaz réchauffés par les gaz d'échappement détendus sont mélangés au liquide et/ou à la vapeur et/ou au gaz réchauffés par les gaz d'échappement remis en circulation.

15. Dispositif pour la récupération d'énergie provenant de la chaleur dissipée d'un moteur diesel mobile à combustion interne avec une remise en circulation des gaz d'échappement et une turbosoufflante, **caractérisé par** la combinaison des caractéristiques suivantes :
• une conduite de remise en circulation des gaz d'échappement partant de la conduite de gaz d'échappement menant du moteur diesel mobile à combustion interne à la turbosoufflante ,
• au moins un échangeur de chaleur pour le transfert de l'énergie calorifique des gaz d'échappement remis en circulation vers un fluide caloporteur ,
• un dispositif pour l'augmentation de la pression du fluide caloporteur ,
• une machine de travail, de préférence une turbine à vapeur, qui transforme l'énergie stockée dans le fluide caloporteur en énergie mécanique.

16. Dispositif selon la revendication 15, **caractérisé par** un échangeur de chaleur ou plus qui réchauffent par niveaux le fluide caloporteur.

17. Dispositif selon la revendication 15 ou 16, **caractérisé en ce que** le fluide caloporteur est identique au fluide refroidisseur pour le moteur à combustion interne.

18. Dispositif selon l'une quelconque des revendications 15 à 17, **caractérisé en ce qu'**au moins un échangeur de chaleur est une pompe à chaleur.

19. Dispositif selon l'une quelconque des revendications 15 à 18, **caractérisé en ce qu'**un accumulateur d'énergie est disposé en amont de la machine de travail.

20. Dispositif selon l'une quelconque des revendications 15 à 19, **caractérisé en ce que** la machine de travail est accouplée à au moins un entraînement pour au moins un groupe auxiliaire pour le processus thermique ou chimique, de préférence des pompes à fluide refroidisseur ou à lubrifiant.

21. Dispositif selon l'une quelconque des revendications 15 à 20, **caractérisé en ce que** la machine de travail est accouplée à au moins un entraînement pour au moins un groupe auxiliaire pour un véhicule, de préférence à l'entraînement d'un groupe hydraulique et/ou d'un compresseur pour une installation de climatisation.

22. Dispositif selon l'une quelconque des revendications 15 à 21, avec un générateur de courant, de préférence un générateur, qui peut être entraîné avec la machine de travail et qui transforme au moins une partie de l'énergie mécanique en énergie électrique.

23. Dispositif selon la revendication 22, **caractérisé en ce que** l'énergie électrique est prévue pour le fonctionnement de groupes auxiliaires pour le moteur à combustion interne, de préférence des pompes à fluide refroidisseur ou à lubrifiant.

24. Dispositif selon la revendication 22, **caractérisé en ce que** l'énergie électrique est prévue pour le fonctionnement de groupes auxiliaires pour un véhicule, de préférence d'un groupe hydraulique et/ou d'un compresseur pour une installation de climatisation.

25. Dispositif selon l'une quelconque des revendications 15 à 24, **caractérisé par** une turbine à gaz d'échappement du moteur à combustion interne, une dérivation à gaz d'échappement pour les gaz d'échappement à remettre en circulation qui bifurque, dans le sens d'écoulement des gaz d'échappement, de la conduite à gaz d'échappement en amont de la turbine à gaz d'échappement, débouchant dans un échangeur de chaleur.

26. Dispositif selon la revendication 25, **caractérisé en ce qu'**un échangeur de chaleur pour les gaz d'échappement détendus dans la turbine à gaz d'échappement est disposé en aval de la turbine à gaz d'échappement.

27. Dispositif selon les revendications 25 et 26, **caractérisé en ce qu'**une conduite à fluide caloporteur mène de l'échangeur de chaleur disposé en aval de la turbine à gaz d'échappement vers l'échangeur de chaleur pour les gaz d'échappement à remettre en circulation .

28. Dispositif selon les revendications 25 et 26, **caractérisé en ce qu'**un dispositif mélangeur est prévu pour le fluide caloporteur réchauffé par les gaz d'échappement à remettre en circulation et pour le fluide caloporteur réchauffé par les gaz d'échappement restants.
